# FASCICULE DE BREVET EUROPEEN

(11) **EP 1 941 191 B1**
(45) Date de publication et mention de la délivrance du brevet: **21.04.2010**
(21) Numéro de dépôt: 06830972.3
(22) Date de dépôt: 19.10.2006
(51) Int. Cl.: F16K 1/36, F16K 27/02

(54) **VANNE A CLAPET**
KLAPPENVENTIL
FLAP VALVE

(30) Priorité: 28.10.2005 FR 0511107
(43) Date de publication de la demande: 09.07.2008
(73) Titulaire: Valeo Systèmes de Contrôle Moteur, 95800 Cergy (FR)
(72) Inventeur: DUTOT, Antoine, F-76960 Notre Dame de Bondeville (FR); ALBERT, Laurent, F-95810 Vallangoujard (FR); RENARD, Nicolas, F-78955 Carrieres Sous Poissy (FR)
(74) Mandataire: Rolland, Jean-Christophe
(86) Numéro de dépôt international: PCT/FR2006/002347
(87) Numéro de publication internationale: WO 2007/048902

(56) Documents cités:
- WO-A-02/36999
- US-A- 1 529 926
- US-A1- 2002 033 462

## Description

La présente invention concerne une vanne de régulation de débit utilisable par exemple dans un circuit de recyclage des gaz d'échappement (ou circuit EGR de l'anglais Exhaust Gaz Recirculation) d'un moteur thermique de véhicule automobile (voiture, camion, transport collectif, utilitaire...).

### ARRIERE PLAN DE L'INVENTION

Une telle vanne comprend un premier conduit, assurant l'admission des gaz d'échappement dans la vanne, et un deuxième conduit, assurant la sortie des gaz de la vanne. Le premier conduit est perpendiculaire au deuxième conduit et débouche dans une portion de liaison du deuxième conduit au premier conduit en définissant une intersection formant un siège d'un clapet coulissant dans la portion de liaison du deuxième conduit selon une direction perpendiculaire au siège entre une position de fermeture dans laquelle le clapet est appliqué contre le siège et une position extrême d'ouverture dans laquelle le clapet est écarté du siège. Le clapet est mis en mouvement au moyen d'un actionneur entre sa position de fermeture et sa position d'ouverture pour régler l'écartement (ou levée) du clapet par rapport à son siège et ainsi la section de passage des gaz d'échappement, la position extrême d'ouverture assurant un débit maximal des gaz d'échappement dans la vanne.

Les normes anti-pollution rendent désormais nécessaire de recycler une part plus importante des gaz d'échappement. Il a donc été envisagé d'accroître le débit des gaz d'échappement dans les vannes en augmentant la levée du clapet et / ou les diamètres du clapet et de son siège. Cependant, ces solutions posent des problèmes de tenue mécanique et entraînent une augmentation de l'encombrement de la vanne notamment incompatible avec, d'une part, l'espace disponible qui est de plus en plus restreint sous le capot moteur des véhicules et, d'autre part, l'allégement général des véhicules que souhaitent les constructeurs afin de limiter la consommation en carburant de leurs véhicules.

Or, on s'est aperçu que le changement de direction des gaz d'échappement lors de leur passage du premier conduit vers le deuxième conduit engendre des turbulences perturbant l'écoulement des gaz d'échappement dans la section de passage délimitée par le clapet et son siège. Ces perturbations limitent le débit maximal des gaz d'échappement dans la vanne.

Le document US 2002/0033462 décrit une vanne d'échappement pour chambre à vide comportant deux conduits perpendiculaires et un clapet de fermeture.

### OBJET DE L'INVENTION

Un but de l'invention est de fournir une vanne permettant un fort débit tout en ayant une structure relativement compacte.

### BREVE DESCRIPTION DE L'INVENTION

A cet effet, on prévoit une vanne comportant les caractéristiques de la revendication 1.

La surface dé déviation guide le flux gazeux provenant du premier conduit vers le deuxième conduit, ce qui permet de limiter les perturbations du flux gazeux liées au changement de direction du flux gazeux.

Avantageusement, la surface de déviation est une surface de révolution de génératrice incurvée.

La réalisation d'une telle surface est aisée par des moyens traditionnels d'usinage et relativement peu onéreuse.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue schématique de la vanne conforme à l'invention en coupe longitudinale selon la ligne I-I de la figure 2,
- la figure 2 est une vue schématique de la vanne montrant de dessous en coupe selon la ligne II-II de la figure 1, le contour interne du deuxième conduit et le contour du siège,
- la figure 3 est une vue en perspective montrant par transparence les contours internes de la vanne.

### DESCRIPTION DETAILLEE DE L'INVENTION

En référence aux figures, la vanne généralement désignée en 100 comprend un premier conduit 1 destiné à être raccordé à une canalisation d'arrivée de gaz et un deuxième conduit 2 qui s'étend perpendiculairement au conduit 1 et est destiné à être raccordé à une canalisation d'évacuation des gaz.

Le conduit 2 possède une portion de liaison 3 au conduit 1. La portion de liaison 3 comporte deux parois planes 4, 5 en regard l'une de l'autre et reliées par une paroi de fond 6. Le conduit 1 débouche dans la portion de liaison 3 par la paroi plane 4 en définissant une intersection formant un siège 7 d'un clapet 8. Le clapet 8 est solidaire d'une tige d'actionnement 9 reçue à coulissement dans un alésage 10 ménagé dans la paroi plane 5. L'alésage 10 s'étend en regard du siège 7 perpendiculairement à celui-ci et débouche dans la portion de liaison 3. La tige d'actionnement 9 est reliée 3. La tige d'actionnement 9 est reliée à un actionneur 12 fixé à l'extérieur du conduit 2.

Le clapet 8 possède en regard du siège 7 une surface de déviation 13 formée d'une surface de révolution de génératrice incurvée ici en arc de cercle. La surface de déviation 13 a ainsi un profil curviligne ayant une base 14 étroite dirigée vers le siège 7 et s'évasant à l'opposé du siège 7 jusqu'à un bord périphérique 15 du clapet 8. Au niveau du bord périphérique 15, la génératrice vient tangenter un plan perpendiculaire à la direction de coulissement pour se confondre avec ce plan. La base 14 est formée par l'extrémité plane de la tige d'actionnement 9 opposée à l'actionneur 12 qui traverse le clapet 8 et est soudée à celui-ci au niveau de la base 14. Le clapet 8 possède à l'opposé du siège 7 une face arrière 16 plane en saillie du centre de laquelle s'étend un bossage 11.

La paroi de fond 6 de la portion de liaison 3 entoure partiellement le clapet 8 parallèlement à la direction de coulissement du clapet 8 et rejoint le reste du conduit 2 dans une zone de raccordement 17. La paroi de fond 6 est écartée du bord périphérique 15 d'une distance dont la détermination est expliquée en relation avec le fonctionnement de la vanne dans la suite de la description.

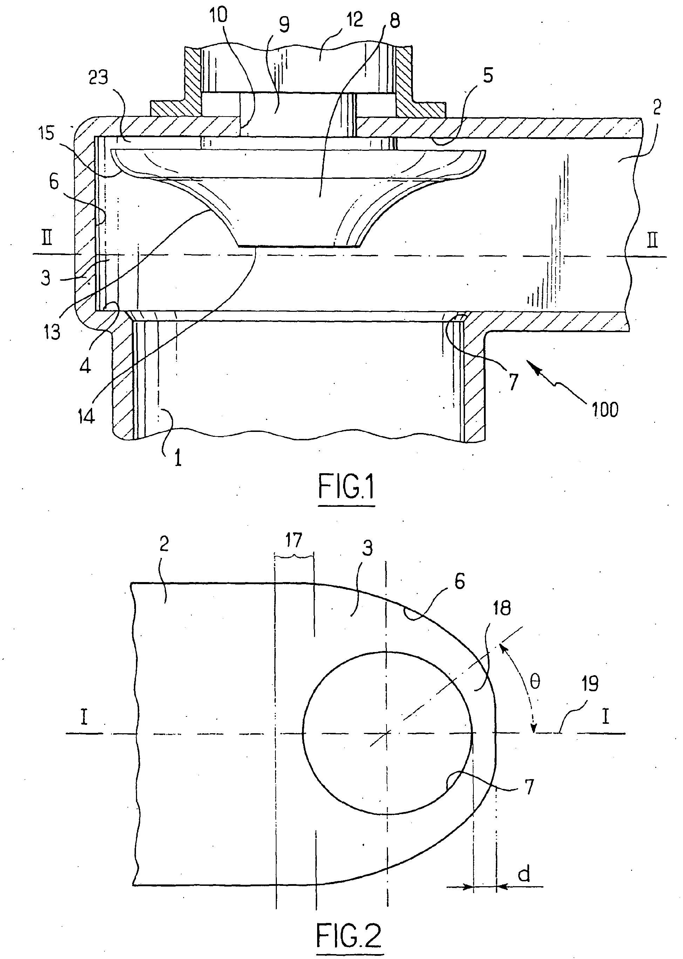

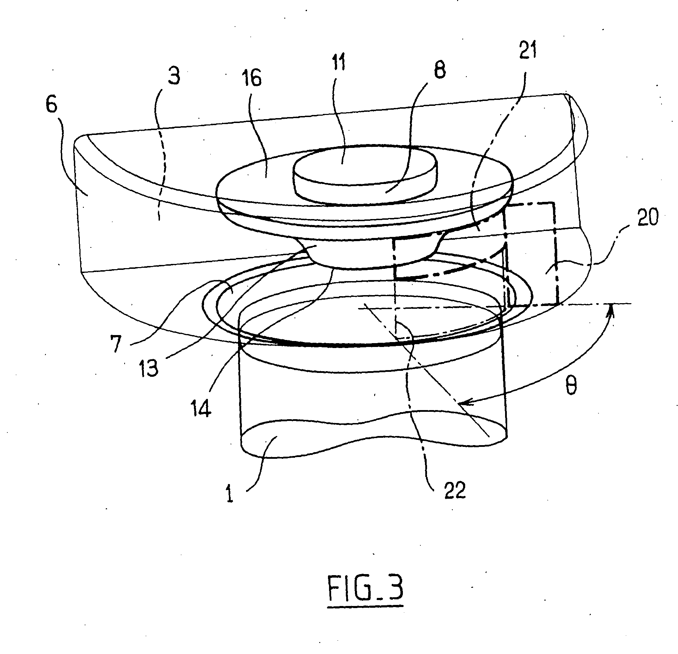

L'actionneur 12 commande ainsi le coulissement du clapet 8 selon une direction perpendiculaire au siège 7 entre une position extrême de fermeture dans laquelle le clapet 8 est appliqué contre le siège 7 et une position d'ouverture (représentée à la figure 1), ou position de levée maximale du clapet 8, dans laquelle le clapet 8 est écarté du siège 7 et le bord périphérique 15 définit avec le siège 7 à l'aplomb de celui-ci une section maximale théorique de passage des gaz (représentée en trait mixte fin sur la figure 3 et référencée 22).

En position extrême d'ouverture, l'actionneur 12 est commandé pour que le clapet 8 s'étende au voisinage immédiat de la paroi 5. Ceci permet d'éviter que des gaz ne viennent circuler en arrière du clapet 8 et provoquer des turbulences perturbant l'écoulement des gaz en amont du clapet. Plus précisément, en position extrême d'ouverture, le bossage 11 du clapet 8 est en appui contre la paroi 5 de telle manière qu'un espace 23 de faible épaisseur soit laissé entre la paroi 5 et le clapet 8. Comme le bossage 11 est en appui contre la paroi 5, le clapet 8 obture l'alésage 10 et empêche que des particules et des saletés véhiculées par les gaz ne viennent s'introduire dans l'alésage 10 eut altérer la qualité du coulissement de la tige 9. L'espace 13 laissé entre le clapet 8 et la paroi 5 permet d'éviter un effet ventouse s'opposant au retour du clapet 8 de sa position extrême d'ouverture vers sa position extrême de fermeture. L'appui du clapet 8 sur la paroi 5 par une surface réduite permet de limiter les sollicitations que pourraient engendrer, sur la liaison de la tige 9 au clapet 8, un appui sur une grande surface si la tige 9 et le clapet 8 n'étaient pas exactement perpendiculaires ou si la paroi 5 ou la face arrière 16 présentaient des défauts de planéité.

La surface de déviation 13 a pour fonction de renvoyer perpendiculairement au conduit 1 un flux gazeux provenant de celui-ci. Le guidage du flux gazeux par la surface de déviation permet de limiter l'apparition de turbulences dans le flux gazeux lors du passage de celui-ci du premier conduit au deuxième conduit et améliore le débit dans la vanne. La forme de la surface de déviation 13 en surface de révolution de génératrice incurvée facilite la réalisation du clapet. La forme de la génératrice en arc de cercle allie simplicité de réalisation et efficacité.

La paroi de fond 6 de la portion de liaison 3 est écartée du bord périphérique 15 d'une distance telle que, pour la position extrême d'ouverture, la paroi de fond 6 définit avec le bord périphérique 15 du clapet 8 et le siège 7 un passage 18 de section croissant depuis un axe médian 19 de la paroi de fond 6 vers la zone de raccordement 17. Plus précisément, la paroi de fond 6 est agencée de telle manière que, pour tout secteur angulaire θ défini entre l'axe médian 19 et un point quelconque de la paroi de fond 6, la section de passage 20 définie localement entre la paroi de fond 6, le bord périphérique 15 et le siège 7 au voisinage de ce point est au moins égale à une section efficace de passage 21 définie localement à l'aplomb du siège 7 entre le bord périphérique 15 et le siège 7 dans le secteur angulaire considéré. La section efficace de passage 21 est égale à environ la moitié de la section maximale théorique de passage 22 définie localement dans le secteur angulaire considéré.

La section de passage 20 est au moins égale à la section efficace de passage 21 affectée d'un coefficient k supérieur à 1 et dépendant du secteur angulaire θ considéré.

En l'espèce, le coefficient k est égal à π divisé par l'angle θ en radin (π/θ) Ainsi, pour θ = π/4, la section 20 est égale à quatre fois la section 21. Pour les valeurs d'angle θ proches de zéro, la paroi de fond 6 est rectiligne et écartée du clapet 8 d'une distance d au niveau de l'axe médian 19 de telle manière que la section 20 soit supérieure à la section 21 même pour les faibles valeurs de θ. Le coefficient dépendant de θ permet de tenir compte du débit local des gaz d'échappement qui augmente à mesure que θ augmente.

Bien entendu, l'invention n'est pas limitée au mode de réalisation décrit mais englobe les variantes de réalisation entrant dans le cadre de l'invention défini par les revendications.

Les moyens de butée du clapet en position d'ouverture peuvent être formés d'un bossage s'étendant en saillie de la paroi plane 5.

D'une manière générale, la section 20 peut être égale à k fois la section 21 avec 1 ≤ k ≤ π/θ pour θ variant entre 0 et 2π /3 environ de part et d'autre de l'axe médian 19.

La combinaison de la forme du deuxième conduit, la surface de déviation du clapet et son positionnement en position d'ouverture constituent une solution optimale pour maximiser le débit dans la vanne. Chacune de ces caractéristiques peut cependant être utilisée de façon indépendante des autres pour réaliser l'invention et une combinaison de deux de ces caractéristiques seulement est utilisable.

La portion de liaison peut avoir différentes formes et en particulier :
- la portion de liaison selon une direction perpendiculaire au siège, la portion de liaison comprend, en regard du siège du clapet, une surface plane s'étendant, du côté d'une portion évasée du clapet, parallèlement à la direction de renvoi du flux gazeux et, éventuellement,
- la portion de liaison comporte deux parois planes en regard et reliées par une paroi de fond, le - premier conduit débouchant sur l'une des parois planes et, éventuellement,
- la portion de liaison a une section transversale sensiblement rectangulaire.

La paroi plane parallèle à la direction de renvoi du flux, et donc ici, parallèle à la face arrière du clapet, permet de limiter les turbulences du flux au moment de sa rencontre avec ladite paroi. Le guidage du flux gazeux par cette paroi s'effectue ainsi selon un écoulement le plus laminaire possible. Prévoir deux surfaces planes permet d'améliorer encore cet écoulement. Les surfaces planes peuvent être reliées l'une à l'autre par d'autres surfaces planes (section transversale rectangulaire, facile à fabriquer) ou par des surfaces courbes (section transversale ovale) ou autres...

## Revendications

1. Vanne (100) de régulation de débit pour moteur thermique de véhicule automobile, comportant un premier conduit (1) débouchant dans un deuxième conduit (2) perpendiculairement au deuxième conduit en définissant une intersection formant un siège (7) d'un clapet (8) coulissant dans le deuxième conduit perpendiculairement au siège entre une position de fermeture et une position d'ouverture, **caractérisée en ce que** le clapet possède en regard du siège une surface de déviation (13) de profil curviligne ayant une base étroite (14) dirigée vers le siège et s'évasant à l'opposé du siège pour renvoyer perpendiculairement au premier conduit un flux gazeux provenant de celui-ci, la surface de déviation (13) étant une surface de révolution de génératrice incurvée, le premier conduit débouchant dans une portion de liaison (3) du deuxième conduit, le clapet (8) coulissant dans la portion de liaison selon une direction perpendiculaire au siège, la portion de liaison (3) comprenant deux parois planes (4, 5) en regard et reliées par une paroi de fond (6), le premier conduit débouchant sur l'une des parois planes (4).

2. Vanne selon la revendication 1, dans laquelle la génératrice a une forme en arc de cercle.

3. Vanne selon l'une des revendications 1 et 2, dans laquelle la portion de liaison (3) a une section transversale sensiblement rectangulaire.

4. Vanne selon l'une des revendications 1 à 3, dans laquelle la paroi de fond entoure partiellement le clapet parallèlement à la direction de coulissement à une distance d'un bord (15) du clapet telle que, pour la position d'ouverture, la paroi de fond définit avec le bord du clapet et le siège un passage (18) de section croissant depuis un axe médian (19) de la paroi de fond vers des zones de raccordement (17) de la paroi de fond au deuxième conduit.

5. Vanne selon la revendication 4, dans laquelle la paroi de fond (6) est agencée de telle manière que, pour tout secteur angulaire (θ) défini entre l'axe médian (19) de la paroi de fond et un point quelconque de la paroi de fond, la section de passage (18) définie localement entre la paroi de fond, le bord (15) du clapet (8) et le siège (7) au voisinage de ce point est au moins égale au produit d'un coefficient (k) et d'une section efficace de passage (21) définie localement à l'aplomb du siège entre le bord du clapet et le siège dans le secteur angulaire considéré.

6. Vanne selon la revendication 5, dans laquelle la section efficace de passage (21) définie localement à l'aplomb du siège (7) entre le bord (15) du clapet (8) et le siège (7) est égale à environ la moitié de la section maximale théorique de passage (22) définie localement dans le secteur angulaire considéré (θ) à l'aplomb du siège entre le bord du clapet et le siège.

7. Vanne selon la revendication 5, dans laquelle le coefficient (k) dépend de l'angle (θ) du secteur angulaire considéré.

8. Vanne selon la revendication 5, dans laquelle le coefficient (k) est compris entre 1 et π divisé par l'angle en radian du secteur angulaire considéré (θ).

9. Vanne selon la revendication 1, comprenant des moyens d'actionnement (12) du clapet entre ses deux positions qui sont commandés pour amener le clapet au voisinage immédiat de la paroi plane (5) de la portion de liaison (3) s'étendant en regard du siège (7).

10. Vanne selon la revendication 9, dans laquelle un espace (23) de faible épaisseur est laissé entre cette paroi plane (5) en regard du siège (7) et le clapet (8) en position d'ouverture.

11. Vanne selon la revendication 9, comportant des moyens de butée (11) du clapet en position d'ouverture pour maintenir l'espace (23) entre la paroi plane (5) en regard du siège et le clapet (8).

12. Vanne selon la revendication 11, dans laquelle le clapet (8) est solidaire d'une tige (9) d'actionnement reçue dans un alésage (10) ménagé dans la paroi plane (5) du deuxième conduit (2) en regard du siège (7), et le clapet en position d'ouverture obture l'alésage.

13. Vanne selon la revendication 12, dans laquelle la surface de déviation (13) présente une base étroite (14) dirigée vers le siège (7), cette base (14) étant formée par l'extrémité plane de la tige (9) d'actionnement qui traverse le clapet (8).

## Claims

1. Valve (100) for regulating a flow for a motor vehicle combustion engine comprising a first duct (1) opening into a second duct (2) at right angles to the second duct thereby defining an intersection that forms a seat (7) for a valve disk (8) that slides in the second duct at right angles to the seat between a closed position and an open position, **characterized in that** the valve disk has, facing the seat, a deviation surface (13) of curvilinear profile having a narrow base (14) facing toward the seat and widening away from the seat in order to deflect at right angles to the first duct a gaseous stream originating therefrom, the deviation surface (13) being a surface of revolution with a curved generatrix, the first duct opening into a connecting portion (3) of the second duct, the valve disk (8) sliding in the connecting portion in a direction at right angles to the seat, the connecting portion (3) comprising two flat walls (4, 5) facing one another and connected by an end wall (6), the first duct opening onto one of the flat walls (4).

2. Valve according to Claim 1, in which the generatrix has the shape of an arc of a circle.

3. Valve according to either of Claims 1 and 2, in which the connecting portion (3) has a cross section of substantially rectangular shape.

4. Valve according to one of Claims 1 to 3, in which the end wall partially surrounds the valve disk parallel to the direction of sliding at a distance from an edge (15) of the valve disk that is such that, for the open position, the end wall defines with the edge of the valve disk and the seat a passage (18), the cross section of which increases from a median axis (19) of the end wall toward regions (17) where the end wall meets the second duct.

5. Valve according to Claim 4, in which the end wall (6) is designed in such a way that, for any angular sector (θ) defined between the median axis (19) of the end wall and any arbitrary point on the end wall, the passage cross section (18) locally defined between the end wall, the edge (15) of the valve disk (8) and the seat (7) in the vicinity of this point is at least equal to the product of a coefficient (k) and an effective passage cross section (21) locally defined in line with the seat between the edge of the valve disk and the seat in the angular sector concerned.

6. Valve according to Claim 5, in which the effective passage cross section (21) locally defined in line with the seat (7) between the edge (15) of the valve disk (8) and the seat (7) is equal to approximately half the theoretical maximum passage cross section (22) locally defined in the angular sector (0) concerned in line with the seat between the edge of the valve disk and the seat.

7. Valve according to Claim 5, in which the coefficient (k) is dependent on the angle (θ) of the angular sector concerned.

8. Valve according to Claim 5, in which the coefficient (k) ranges between 1 and divided by the angle, in radians, of the angular sector (θ) concerned.

9. Valve according to Claim 1, comprising means (12) of operating the valve disk between its two positions which are controlled in such a way as to bring the valve disk into close proximity to the flat wall (5) of the connecting portion (3) lying facing the seat (7).

10. Valve according to Claim 9, in which a narrow space (23) is left between this flat wall (5) facing the seat (7) and the valve disk (8) in the open position.

11. Valve according to Claim 9, comprising stop means (11) for arresting the valve disk in the open position in order to maintain the space (23) between the flat wall (5) facing the seat and the valve disk (8).

12. Valve according to Claim 11, in which the valve disk (8) is secured to an actuating stem (9) housed in a bore (10) formed in the flat wall (5) of the second duct (2) facing the seat (7), and the valve disk, in the open position, closes off the bore.

13. Valve according to Claim 12, in which the deviation surface (13) has a narrow base (14) facing toward the seat (7), this base (14) being formed by the flat end of the actuating stem (9) which passes through the valve disk (8).

## Patentansprüche

1. Durchflussregulierungsventil (100) für Kraftfahrzeug-Brennkraftmaschine, mit einer ersten Leitung (1), die in eine zur zweiten Leitung senkrechte zweite Leitung (2) mündet, indem eine Kreuzung definiert ist, die einen Sitz (7) einer Klappe (8) bildet, die in der zweiten Leitung senkrecht zu dem Sitz zwischen einer Schließstellung und einer Öffnungsstellung gleitet, **dadurch gekennzeichnet, dass** die Klappe gegenüber dem Sitz eine Ablenkoberfläche (13) mit einem krummlinigen Profil besitzt, die eine schmale Basis (14) aufweist, die zu dem Sitz gerichtet ist und sich gegenüber dem Sitz erweitert, um eine von der ersten Leitung ankommende Gasströmung senkrecht zu dieser Leitung zurückzuleiten, wobei die Ablenkoberfläche (13) eine rotationssymmetrische Oberfläche mit gekrümmter Erzeugender ist, wobei die erste Leitung in einen Verbindungsabschnitt (3) der zweiten Leitung mündet, wobei die Klappe (8) in dem Verbindungsabschnitt in einer Richtung senkrecht zu dem Sitz gleitet, wobei der Verbindungsabschnitt (3) zwei gegenüberliegende ebene Wände (4, 5) besitzt, die mit einer Bodenwand (6) verbunden sind, wobei die erste Leitung in eine (4) der ebenen Wände mündet.

2. ventil nach Anspruch 1, wobei die Erzeugende eine Kreisbogenform hat.

3. Ventil nach einem der Ansprüche 1 und 2, wobei der Verbindungsabschnitt (3) einen im Wesentlichen rechtwinkligen Querschnitt hat.

4. Ventil nach einem der Ansprüche 1 bis 3, wobei die Bodenwand die Klappe parallel zur Gleitrichtung in einem Abstand von einem Rand (15) der Klappe teilweise umgibt, derart, dass für die Öffnungsstellung die Bodenwand mit dem Rand der Klappe und dem Sitz einen Durchlass (18) mit einem Querschnitt definiert, der von einer Medianachse (19) der Bodenwand zu den Verbindungszonen (17) der Bodenwand mit der zweiten Leitung zunimmt.

5. Ventil nach Anspruch 4, wobei die Bodenwand (6) in der Weise angeordnet ist, dass für jeden Winkelsektor (θ), der zwischen der Medianachse (19) der Bodenwand und einem beliebigen Punkt der Bodenwand definiert ist, der Querschnitt des Durchlasses (18), der lokal zwischen der Bodenwand, dem Rand (15) der Klappe (8) und dem Sitz (7) in der Umgebung dieses Punkts definiert ist, wenigstens gleich dem Produkt aus einem Koeffizienten (k) und einem Wirkquerschnitt des Durchlasses (21), der lokal senkrecht zu dem Sitz zwischen dem Rand der Klappe und dem Sitz in dem betrachteten Winkelsektor definiert ist, ist.

6. Ventil nach Anspruch 5, wobei der Wirkquerschnitt des Durchlasses (21), der lokal senkrecht zu dem Sitz (7) zwischen dem Rand (15) der Klappe (8) und dem Sitz (7) definiert ist, etwa gleich der Hälfte des theoretischen maximalen Querschnitts des Durchlasses (22) ist, der lokal in dem betrachteten Winkelsektor (θ) senkrecht zu dem Sitz zwischen dem Rand der Klappe und dem Sitz definiert ist.

7. Ventil nach Anspruch 5, wobei der Koeffizient (k) von dem Winkel (θ) des betrachteten Winkelsektors abhängt.

8. Ventil nach Anspruch 5, wobei der Koeffizient (k) im Bereich von 1 bis π, dividiert durch den Radianwinkel des betrachteten Winkelsektors (θ), liegt.

9. Ventil nach Anspruch 1, das Mittel (12) zur Betätigung der Klappe zwischen ihren beiden Stellungen umfasst, die gesteuert werden, um die Klappe in die unmittelbare Umgebung der ebenen Wand (5) des Verbi.ndungsabschnitts (3), die gegenüber dem Sitz (7) verläuft, zu bringen.

10. Ventil nach Anspruch 9, wobei zwischen dieser ebenen Wand (5) gegenüber dem Sitz (7) und der Klappe (8) in der Öffnungsstellung ein Raum (23) mit geringer Dicke freigelassen wird.

11. Ventil nach Anspruch 9, mit Mitteln (11) für den Anschlag der Klappe in der Öffnungsstellung, um den Raum (23) zwischen der ebenen Wand (5) gegenüber dem Sitz und der Klappe (8) aufrechtzuerhalten.

12. Ventil nach Anspruch 11, wobei die Klappe (8) mit einem Betätigungsstift (9) fest verbunden ist, der in einer Bohrung (10) aufgenommen ist, die in der ebenen Wand (5) der zweiten Leitung (2) gegenüber dem Sitz (7) ausgebildet ist, und die Klappe in der Öffnungsstellung die Bohrung verschließt.

13. Ventil nach Anspruch 12, wobei die Ablenkoberfläche (13) eine schmale Basis (14) aufweist, die zu dem Sitz (7) gerichtet ist, wobei diese Basis (14) durch das ebene Ende des Betätigungsstifts (9), der durch die Klappe (8) verläuft, gebildet ist.
